# EUROPEAN PATENT SPECIFICATION

(11) **EP 2 466 927 B1**
(45) Date of publication and mention of the grant of the patent: **16.11.2016**
(21) Application number: 10807887.4
(22) Date of filing: 28.04.2010
(51) Int. Cl.: H04W 4/12, H04L 12/58, H04L 29/06, H04L 29/08, H04W 4/08

(54) **METHOD, APPARATUS AND SYSTEM FOR MESSAGE TRANSMISSION**
VERFAHREN UND SYSTEM ZUR NACHRICHTENÜBERTRAGUNG
PROCÉDÉ, APPAREIL ET SYSTÈME DE TRANSMISSION DE MESSAGE

(30) Priority: 10.08.2009 CN 200910164083
(43) Date of publication of application: 20.06.2012
(73) Proprietor: ZTE Corporation, Shenzhen, Guangdong 518057 (CN)
(72) Inventor: LI, Fengjun, Guangdong 518057 (CN)
(74) Representative: Office Freylinger
(86) International application number: PCT/CN2010/072290
(87) International publication number: WO 2011/017942

(56) References cited:
- EP-A1- 2 120 407
- CN-A- 101 155 329
- CN-A- 101 212 719
- CN-A- 101 374 118
- US-A1- 2008 114 881

## Description

### Field of the Invention

The present invention relates to the communication field, and in particular, to a method, apparatus and system for transmitting messages.

### Background of the Invention

With the development of the IP-based network, the traditional telecommunication service needs to transfer to the next generation IP-based network. Currently, the 3rd Generation Partnership Project (3GPP), 3rd Generation Partnership Project 2 (3GPP2) and Telecommunication and Internet Converged Services and Protocols for Advanced Networking (TISPAN) standard organizations all take the Session Initiation Protocol (SIP) as the basic protocol of the next generation core network and take the SIP-based IP network as the network basis of service applications, wherein achieving group session function on the basis of SIP protocol is one of the main functions of the converged service system.

The SIP-based converged service system not only supports the message interaction among converged service users and also supports the message interaction between the converged service users and the traditional message service users.

Currently, in relevant art, there is still no deciding method for message interaction between a converged service user and another converged service user or for the message interaction between the converged service users and the traditional message service users, therefore the converged service system cannot judge whether it needs to interact with the traditional message service system timely, which affects user experience.

Patent EP 2120407A1 provides a message delivery mechanism. Patent US 2008/114881A1 provides a method and system for establishing session for message communication between converged IP messaging service client and short messaging service client. However, the above-mentioned problem still remains unsolved.

### Summary of the Invention

One aspect of the present invention is to provide a method, apparatus and system for transmitting messages, which is capable of solving the problems that the converged service system cannot judge whether it needs to interact with the traditional message service system timely and thus it affects user experience in relevant art.

A method an apparatus and a system for transmitting messages are provided according to claims 1 to 15.

By virtue of at least one above technical solution of the present invention, by using the PF/CF or ISF in a converged service system to judge whether it needs to transmit a message from a converged service user by means of a traditional message service system and then transmitting the message to a destination user according to the judgment results, the problems that the converged service system cannot judge whether it needs to interact with the traditional message service system timely and thus affects user experience are solved, which achieves the technical effects that the message transmitting efficiency of the converged service system is increased and the user experience is improved.

### Brief Description of the Drawings.

The drawings, provided for further understanding of the present invention and forming a part of the specification, are used to explain the present invention together with embodiments of the present invention rather than to limit the present invention, wherein
Fig. 1 is a flowchart of a method for transmitting messages according to the first embodiment of the present invention;
Fig. 2 is a flowchart of a method for transmitting messages according to the second embodiment of the present invention;
Fig. 3 is a flowchart of a method for transmitting messages according to the third embodiment of the present invention;
Fig. 4 is a flowchart of a method for transmitting messages according to the fourth embodiment of the present invention;
Fig. 5 is a block diagram of a participant function module used in a converged service system according to the seventh embodiment of the present invention;
Fig. 6 is a block diagram of a controller function module used in a converged service system according to the eighth embodiment of the present invention;
Fig. 7 is a block diagram of an InterSelecting Function module used in a converged service system according to the ninth embodiment of the present invention;
Fig. 8 is a block diagram of an apparatus for transmitting messages according to the tenth embodiment of the present invention;
Fig. 9 is a schematic diagram of a system for transmitting messages according to the eleventh embodiment of the present invention; and
Fig. 10 is a schematic diagram of a system for transmitting messages according to the twelfth embodiment of the present invention.

### Detailed Description of Embodiments

A detailed description of the present invention is provided hereinafter with reference to attached drawings and specific embodiments. It should be understood that, the embodiments offered herein are used for explaining the present invention only and shall not be used for limiting the protection scope of the present invention.

In the following description, for the purpose of explanation, several specific details are described so as to provide thorough understanding of the present invention. However, apparently, in the case with no these specific details, the present invention can also be implemented, additionally, in the situation of no conflict, that is, in the situation of no departing from the scope declared in the claims, the following embodiments and each detail in the embodiments can be combined in any way.

### First embodiment

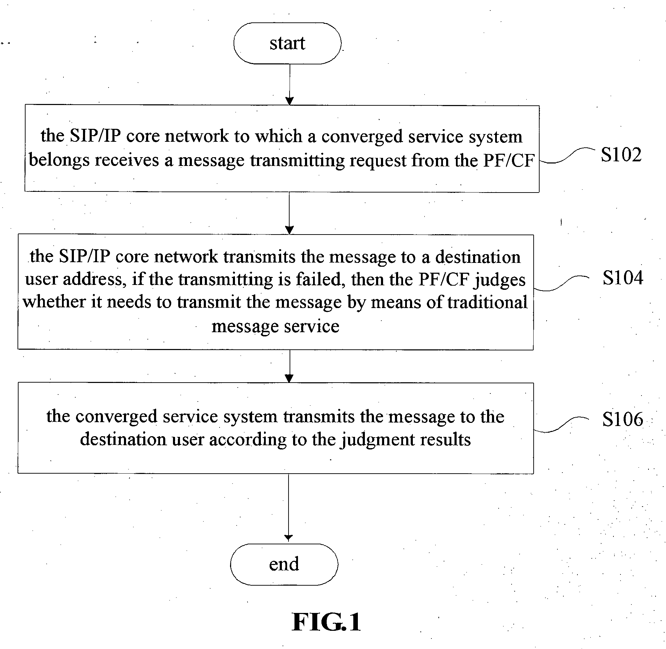

Fig. 1 is a flowchart of a method for transmitting messages according to the first embodiment of the present invention, which method is used for a converged service user to transmit a message to a traditional message service user or a converged service user. As shown in Fig. 1, the method for transmitting messages according to the first embodiment of the present invention comprises;
Step S102: The session initiation protocol/Internet protocol core network (i.e. SIP/IP Core) to which a converged service system belongs receives a message transmitting request from a participant function (PF) module to which a converged service user belongs or from a controller function (CF) module to which a group user address belongs, wherein it carries the destination user address of the message.
Step S104: The SIP/IP Core transmits a message to the destination user address, if the transmitting is failed, then the PF/CF judges whether it needs to transmit the message by means of traditional message service; the SIP/IP Core transmits the message to PF to which the converged service user belongs according to the user identification of the converged service user, or transmits the message to the controller function module (CF) to which the group user address belongs according to the group user address; the PF/CF performing authentication to the message and transmits the message to the SIP/IP Core after the authentication is passed; the SIP/IP Core transmits the message to the Request-URI address; if the transmitting is failed, then it judges whether it needs to transmit the message by means of traditional message service; or the SIP/IP Core transmits the message to the participant function module (PF) to which the converged service user belongs according to the user identification of the converged service user, or transmits the message to the controller function module (CF) to which the group user address belongs according to the group user address; the PF/CF performs authentication to the message and the PF/CF judges whether the Request-URI (wherein, URI is the abbreviation of Uniform Resource Identifier) address is TEL URI address and SIP URI address, if not, then it judges whether it needs to transmit the message by means of traditional message service after the authentication has passed; if the address is a TEL URI address or SIP URI address, then it transmits the message to the SIP/IP Core; the SIP/IP Core transmits the message to the Request-URI address; and if the transmitting is failed, then it judges whether it needs to transmit the message by means of traditional message service.
Step S 106: The converged service system transmits the message to a destination user according to the judgment results.

In step S106, judge the type of the Request-URI address, wherein the type of the Request-URI address includes telephone number resource identification (TEL URI) address and session initiation protocol identification (SIP URI) address; and then transmit the message to the destination user according to the judgment results.

In this case, the type of the Request-URI address can be judged by the PF/CF, and if the Request-URI address is a TEL URI address, then the PF/CF transmits the message to the SIP/IP Core, wherein the carried Request-URI address is the SIP URI address of the InterSelecting module in the converged service system and the message body carries the TEL URI address of the message; the SIP/IP Core transmits the message to the InterSelecting Function module (ISF) according to the Request-URI address; the ISF selects a corresponding InterWorking Function module (IWF) and transmits the message to the IWF, and the IWF transmits the message to a traditional message service system; the traditional message service system transmitting the message to the destination user; and if the Request-URI address is a SIP URI address, then the PF/CF transmits an address conversion request to the ENUM/DNS, wherein it carries the SIP URI address of the destination user; the ENUM/DNS returns a corresponding TEL URI address to the PF/CF after having performed address conversion to the SIP URI address; the PF/CF transmits the message to the SIP/IP Core, wherein the carried Request-URI address is the SIP URI address of the InterSelecting Function module in the converged service system and the message body carries the returned TEL URI address; the SIP/IP Core transmits the message to the ISF according to the Request-URI address; the InterSelecting module selects a corresponding InterWorking Function module and transmits the message to the InterWorking Function module, and the InterWorking Function module transmits the message to a traditional message service system; and the traditional message service system transmitting the message to the destination user.

Additionally, the PF/CF can also only perform authentication to the message and directly transmits the message to the ISF after the authentication has passed and the type of the Request-URI address is judged by the ISF; if the Request-URI address is a TEL URI address, then the ISF selects a corresponding IWF and transmits the message to the IWF, and the IWF transmits the message to a traditional message service system; the traditional message service system transmits the message to a destination user; and if the Request-URI address is a SIP URI address, then the ISF transmits an address conversion request to the ENUM/DNS, wherein it carries the SIP URI address of the destination user; the ENUM/DNS returns a corresponding TEL URI address to the ISF after having performed address conversion to the SIP URI address; the ISF selects a corresponding IWF and transmits the message to the IWF, and the IWF transmits the message to a traditional message service system; and the traditional message service system transmits the message to a destination user.

Additionally, the returned TEL URI address and the message sent from the ISF to the IWF can be carried in the message body by using Multipurpose Internet Mail Extensions (MIME) format. Of course, encapsulation can also be performed using other data formats.

The method for transmitting messages according to the first embodiment of the present invention judges whether it needs to transmit the destination user type of a message from a converged service user by a traditional message service system and then transmits the message to the destination user according to the judgment results, thus avoiding the technical problems that the converged service system cannot judge whether it needs to interact with the traditional message service system timely and affects user experience, which achieves the technical effects that the message transmitting efficiency of the converged service system is increased and the user experience is improved.

### Second embodiment

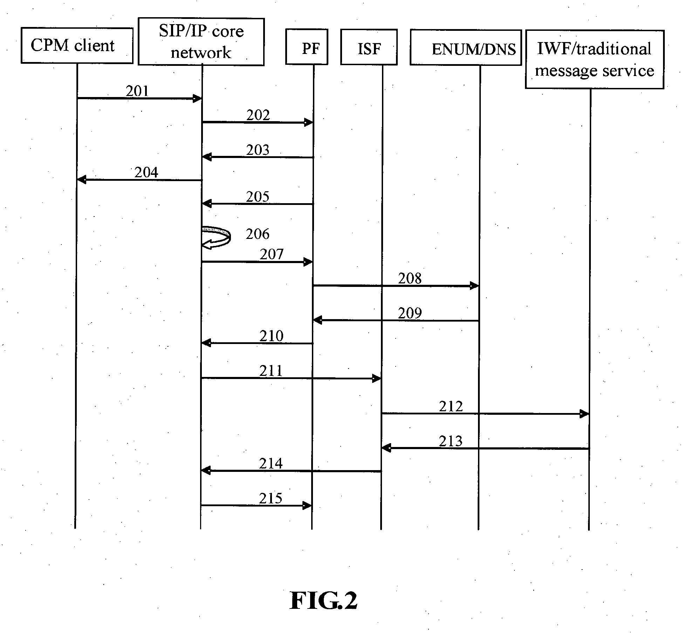

Fig. 2 is a flowchart of a method for transmitting messages according to the second embodiment of the present invention. In this embodiment, the method is used for the message transmitting when the destination user is a non-CPM user in point-to-point manner. As shown in Fig. 2, the method for transmitting messages according to the second embodiment of the present invention comprises:
Step 201: A CPM client transmits a message transmitting request to the SIP/IP Core and the message format complies with the provisions of RFC3428 and RFC3261 protocols, wherein it carries the identification information of a CPM user, and the Request-URI is TEL URI format or SIP URI format as the destination user address identification in this embodiment;
Step 202: The SIP/IP Core forwards the message to a PF to which the CPM user belongs according to the CPM user identification information;
Steps 203 and 204: The PF performs authentication and authorization operations to the CPM user identification, and the PF returns a response message to the CPM client, if the authentication and authorization is failed, then the procedure is terminated, otherwise continue the following procedure;
Step 205: The PF judges the Request-URI address, if it is not TEL URI address or SIP URI address, then end the procedure; otherwise transmit a request message to the SIP/IP Core;
Step 206: The SIP/IP Core attempts to transmit the message to the destination user according to the Request-URI address, and the attempt of the SIP/IP Core is failed;
Step 207: The SIP/IP Core returns a failure response message to the PF;
Step 208: The PF judges if the Request-URI is a SIP URI address, then it transmits an address conversion request to the ENUM/DNS and requests to convert the SIP URI address into a TEL URI address, which request message carries the SIP URI address of the destination user; otherwise directly go to step 210;
Step 209: The ENUM/DNS returns a corresponding TEL URI address of the SIP URI address to the PF and the PF sets the received TEL URI address to be the value of Request-URI;
Step 210: The PF transmits a message to the SIP/IP Core, wherein the value of Request-URI is the SIP URI address of the ISF, and the TEL URI address is carried in the message body by using the manner of MIME;
Step 211: The SIP/IP Core transmits the message to the InterSelecting module (ISF) according to the Request-URI address;
Step 212: The ISF selects an IWF module according to a certain InterSelecting algorithm and transmits the message to the IWF, and in this embodiment, the IWF and the traditional message service system are combined together;
Steps 213 and 214: The traditional message service system transmits the response message to the ISF through the IWF; and
Step 215: The SIP/IP Core returns a response message to the PF.

The method for transmitting messages according to the second embodiment of the present invention avoids the technical problems that the converged service system cannot judge whether it needs to interact with the traditional message service system timely and thus affects user experience, which achieves the technical effect that the message transmitting efficiency of the converged service system is increased and the user experience is improved.

### Third embodiment

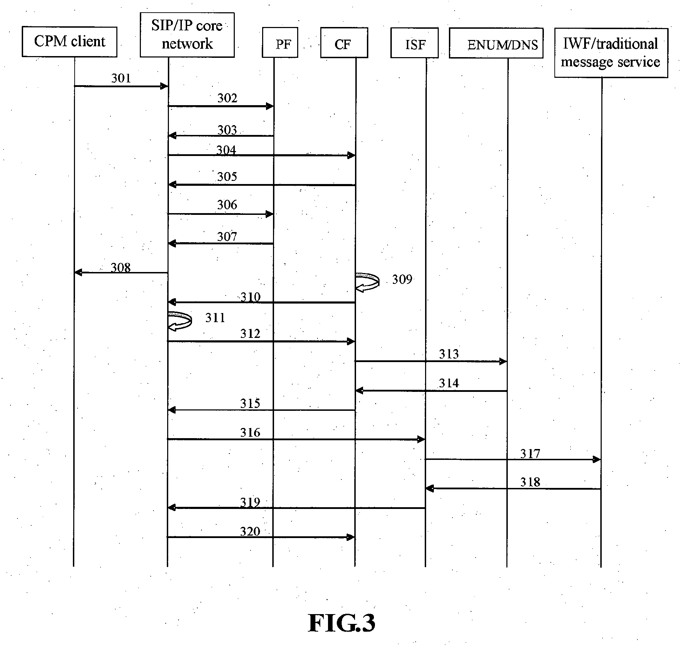

Fig. 3 is a flowchart of a method for transmitting messages according to the third embodiment of the present invention. In this embodiment, this method is used in the group message service, and the addresses of the group members are the message transmitting of non-CPM user messages. As shown in Fig. 3, the method for transmitting messages according to the third embodiment of the present invention comprises:
Step 301: A CPM client transmits a message transmitting request to the SIP/IP Core and the message format complies with the provisions of RFC3428 and RFC3261 protocols, wherein it carries the identification information of a CPM user, and the Request-URI in this embodiment is group user address;
Step 302: The SIP/IP Core forwards the message to a PF, to which the CPM user belongs, according to the CPM user identification information;
Step 303: The PF performs authentication and authorization to the CPM client and forwards the request message to the SIP/IP Core after the authentication and authorization are successful;
Step 304: The SIP/IP Core routes the message to the CF, to which the group address belongs, according to the value of Request-URI;
Step 305: The CF performs authentication and authorization to the group address and returns a response message to the SIP/IP Core after the authentication and authorization are successful;
Steps 306, 307, and 308: The SIP/IP Core returns the response message to the PF and the CPM client;
Step 309: The CF obtains the group member address information from a group server and in this embodiment the group server and the CF are combined together;
Step 310: The CF selects one group member address from the group members, and sets the Request-URI address to be this group member address, which address is SIP URI address in this embodiment, and transmits the message to the SIP/IP Core;
Step 311: The SIP/IP Core attempts to transmit the message to a corresponding destination user of the Request-URI address and the transmitting is failed;
Step 312: The SIP/IP Core returns a failure response message to the CF;
Step 313: The CF requests to obtain a corresponding TEL URI address of the Request-URI address from the ENUM/DNS;
Step 314: The ENUM/DNS returns the corresponding TEL URI address to the CF;
Step 315: The CF sets the Request-URI address to be the received SIP URI address of the ISF and encapsulates the received SIP URI address in the message body by using the manner of MIME;
Steps 316 and 317: The ISF transmits the message to the IWF after having selected an IWF module according to a certain algorithm and forwards the message to a traditional message service system;
Steps 318 and 319: The traditional message service system transmits the response message to the ISF through the IWF; and
Step 320: The SIP/IP Core returns a response message to the CF.

The method for transmitting messages according to the third embodiment of the present invention avoids the technical problems that the converged service system cannot judge whether it needs to interact with the traditional message service system timely and thus affects user experience, which achieves the technical effect that the message transmitting efficiency of the converged service system is increased and the user experience is improved.

### Fourth embodiment

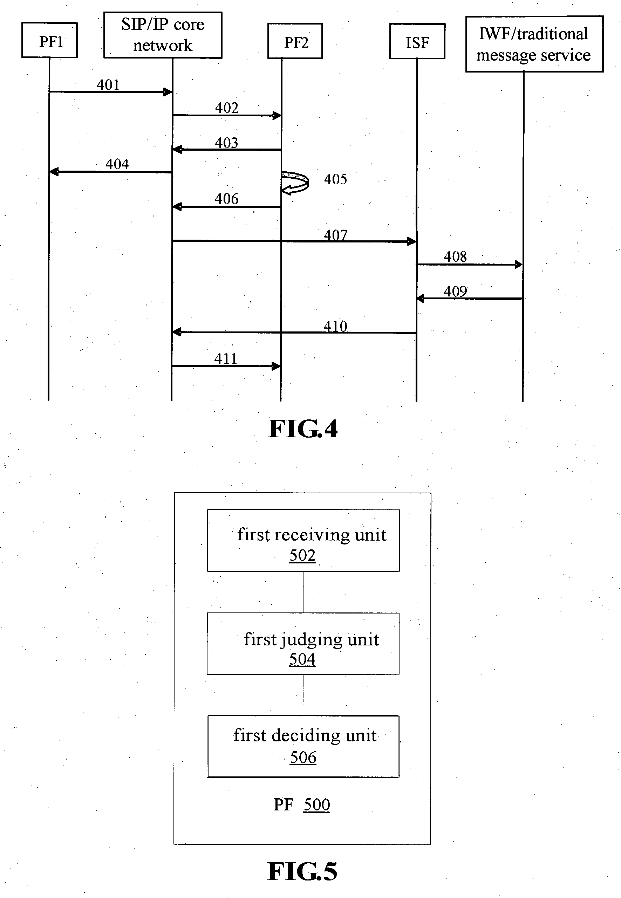

Fig. 4 is a flowchart of a method for transmitting messages according to the fourth embodiment of the present invention. In this embodiment, the present method is used for transmitting messages in the situation that the destination user is a CPM user. The present method embodiment is mainly used for a CPM user to transmit messages to the CPM users in different home domains and forward this message to a traditional message service terminal of the destination user according to the destination user configuration information. For the simplification of figures, the procedure is described from the PF1 to which the CPM client belongs. As shown in Fig. 4, the method for transmitting messages according to the fourth embodiment of the present invention comprises:
Step 401: The PF1 performs authentication and authorization to the CPM client and forwards the message to the SIP/IP Core after the authentication and authorization are completed successfully;
Step 402: The SIP/IP Core transmits the message to the PF2 according to the Request-URI address;
Steps 403 and 404: The PF2 returns a response message to the PF1;
Step 405: In this embodiment, take the SIP terminal of the destination user not registering services for example, the PF2 obtains the user configuration information from a user configuration server and determines that it needs to forward the message to the MDN address of a mobile phone number;
Step 406: The PF2 converts the MDN number into a TEL URI address, sets the Request-URI address to be the SIP URI address of the ISF, put the TEL URI address in the message body by using MIME encapsulation format, and transmits the message to the SIP/IP Core;
Step 407: The SIP/IP Core transmits the message to the ISF;
Step 408: The ISF selects a corresponding IWF according to a certain algorithm and transmits the message to the IWF and a corresponding traditional message service system, and the message is successfully sent to the destination user terminal;
Steps 409 and 410: The traditional message service system transmits the response message to the SIP/IP Core through the IWF; and
Step 411: The SIP/IP Core forwards the response message to the PF2.

The method for transmitting messages according to the fourth embodiment of the present invention avoids the technical problems that the converged service system cannot judge whether it needs to interact with the traditional message service system timely and thus affects user experience, which achieves the technical effect that the message transmitting efficiency of the converged service system is increased and the user experience is improved.

### Fifth embodiment

In this embodiment, the method is used for the message transmitting when the destination user is non-CPM user in point-to-point manner. The method for transmitting messages according to the fifth embodiment of present invention comprises:
Step 501: A CPM client transmits a message transmitting request to the SIP/IP Core and the message format complies with the provisions of RFC3428 and RFC3261 protocols, wherein it carries the identification information of a CPM user, and the Request-URI is TEL URI format or SIP URI format as the destination user address identification in this embodiment;
Step 502: The SIP/IP Core forwards the message to a PF, to which the CPM user belongs, according to the CPM user identification information;
Steps 503 and 504: The PF performs authentication and authorization operations to the CPM user identification, and the PF returns a response message to the CPM client, if the authentication and authorization is failed, then the procedure is terminated, otherwise continue the following procedure;
Step 505: The PF judges the Request-URI address, if it is neither a TEL URI address or a SIP URI address, then end the procedure; otherwise transmit a request message to the SIP/IP Core;
Step 506: The SIP/IP Core attempts to transmit the message to the destination user according to the Request-URI address, and the attempt of the SIP/IP Core is failed;
Step 507: The SIP/IP Core returns a failure response message to the PF;
Step 508: The PF stores the destination user address Request-URI address in the message body encapsulated by the MIME and sets the SIP URI address of the ISF to be a new Request-URI value;
Step 509: The PF transmits the message to the SIP/IP Core;
Step 510: The SIP/IP Core transmits the message to the ISF according to the Request-URI address;
Step 511: The ISF judges whether the destination user address encapsulated by the MIME is a SIP URI address, if the address is a SIP URI address, then it transmits an address conversion request message to the ENUM/DNS, which request message carries the SIP URI address of the destination user;
Step 512: The ENUM/DNS returns a corresponding TEL URI address of the destination user SIP URI address to the ISF and the ISF stores the SIP URI address of the destination user in the message body encapsulated by the MIME;
Step 513: The ISF selects an IWF module according to a certain InterSelecting algorithm and transmits the message to the IWF;
Steps 514 and 515: The traditional message service system transmits the response message to the ISF through the IWF; and
Step 516: The SIP/IP Core returns a response message to the PF.

The method for transmitting messages according to the fifth embodiment of the present invention avoids the technical problems that the converged service system cannot judge whether it needs to interact with the traditional message service system timely and thus affects user experience, which achieves the technical effect that the message transmitting efficiency of the converged service system is increased and the user experience is improved.

### Sixth embodiment

In this embodiment, this method is used in the group message service, and the addresses of the group members are the message transmitting of non-CPM user messages. The method for transmitting messages according to the sixth embodiment of present invention comprises:
Step 601: A CPM client transmits a message transmitting request to the SIP/IP Core and the message format complies with the provisions of RFC3428 and RFC3261 protocols, wherein it carries the identification information of a CPM user, and the Request-URI is a group user address;
Step 602: The SIP/IP Core forwards the message to a PF to which the CPM user belongs according to the CPM user identification information;
Step 603: The PF performs authentication and authorization to the CPM client and forwards the request message to the SIP/IP Core after the authentication and authorization are completed successfully;
Step 604: The SIP/IP Core routes the message to the CF to which the group address belongs according to the value of Request-URI;
Step 605: The CF performs authentication and authorization to the CPM client and returns a response message to the SIP/IP Core after the authentication and authorization are completed successfully;
Steps 606, 607, and 608: The SIP/IP Core returns the response message to the PF and the CPM client;
Step 609: The CF obtains the group member address information from a group server;
Step 610: The CF selects one group member address from the group members, sets the Request-URI address to be the address of the group member address, which address is SIP URI address in this embodiment, and transmits the message to the SIP/IP Core;
Step 611: The SIP/IP Core attempts to transmit the message to a corresponding destination user of the Request-URI address, and the transmitting is failed;
Step 612: The SIP/IP Core returns a failure response message to the CF;
Step 613: The CF judges whether it needs to use traditional message service to transmit the message to the destination user, if yes, then it stores the value of the destination user address Request-URI address in the message body encapsulated by the MIME, sets the SIP URI address of the ISF to be a new value of the Request-URI, and transmits the message to the SIP/IP Core;
Step 614: The SIP/IP Core transmits the message to the ISF;
Step 615: If the ISF judges that the destination user address carried in the message body encapsulated by MIME is a SIP URI address, then it transmits an address conversion request message to the ENUM/DNS to request to obtain the TEL URI address of the destination user;
Step 616: The ENUM/DNS returns the TEL URI address of the destination user to the ISF;
Steps 617 and 618: The ISF transmits the message to an IWF after having selected the IWF module according to a certain algorithm and forwards the message to a traditional message service system;
Steps 619 and 620: The traditional message service system transmits the response message to the ISF through the IWF; and
Step 621: The SIP/IP Core returns a response message to the CF.

### Seventh embodiment

Fig. 5 is a block diagram of a participant function module used in a converged service system according to the seventh embodiment of the present invention.

As shown in Fig. 5, a participant function module 500 for a converged service system according to the seventh embodiment of the present invention comprises: a first receiving unit 502 for receiving the point-to-point information from the SIP/IP Core of the converged service system; a first judging unit 504 for judging whether it needs to transmit the message by means of traditional message service and judging the type of the Request-URI address in the message; a first deciding unit 506 for deciding the transmitting manner of the message according to the judgment results of the first judging unit; and wherein the type of the Request-URI address includes telephone number resource identification (TEL URI) address and session initiation protocol identification (SIP URI) address.

The participant function module for converged service system according to the seventh embodiment of the present invention avoids the technical problems that the converged service system cannot judge whether it needs to interact with the traditional message service system timely and thus affects user experience by using a judging unit to judge whether it needs to transmit the point-to-point message from a converged service user and the type of the Request-URI address in the message by a traditional message service system and then using a deciding unit to decide the transmitting manner of the message according to the judgment results, which achieves the technical effect that the message transmitting efficiency of the converged service system is increased and the user experience is improved.

### Eighth embodiment

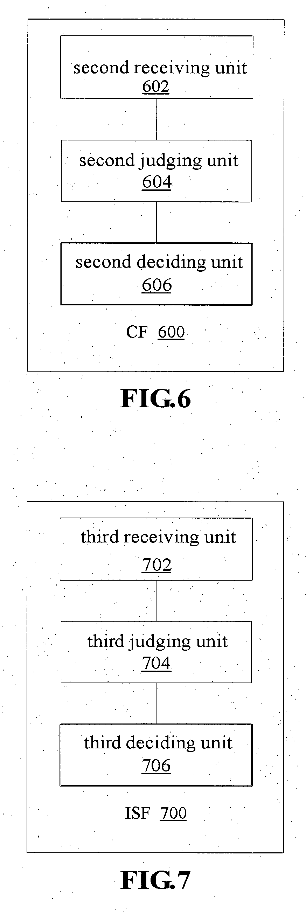

Fig. 6 is a block diagram of a controller function module used in a converged service system according to the eighth embodiment of the present invention.

As shown in Fig. 6, a controller function module 600 for a converged service system according to the eighth embodiment of the present invention comprises: a second receiving unit 602 for receiving the group message from the SIP/IP Core of the converged service system; a second judging unit 604 for judging whether it needs to transmit the message by means of traditional message service and judging the type of the Request-URI address in the message; a second deciding unit 606 for deciding the transmitting manner of the message according to the judgment results of the second judging unit; and wherein the type of the Request-URI address includes telephone number resource identification (TEL URI) address and session initiation protocol identification (SIP URI) address.

The controller function module for converged service system according to the eighth embodiment of the present invention avoids the technical problems that the converged service system cannot judge whether it needs to interact with the traditional message service system timely and thus affects user experience by using a judging unit to judge whether it needs to transmit the group message from a converged service user and the type of the Request-URI address in the message by a traditional message service system and then using a deciding unit to decide the transmitting manner of the message according to the judgment results, which achieves the technical effect that the message transmitting efficiency of the converged service system is increased and the user experience is improved.

### Ninth embodiment

Fig. 7 is a block diagram of an InterSelecting Function module used in a converged service system according to the ninth embodiment of the present invention.

As shown in Fig. 7, an InterSelecting Function module (ISF) **700** for converged service system according to the ninth embodiment of the present invention comprises: a third receiving unit **702** for receiving a message from a PF/CF of the converged service system; a third judging unit **704** for judging the type of the Request-URI address in the message; a third deciding unit **706** for deciding the transmitting manner of the message according to the judgment results of the third judging unit; and wherein the type of the Request-URI address includes telephone number resource identification (TEL URI) address and session initiation protocol identification (SIP URI) address.

The ISF for converged service system according to the ninth embodiment of the present invention avoids the technical problems that the converged service system cannot judge whether it needs to interact with the traditional message service system timely and thus affects user experience by using a judging unit to judge whether it needs to transmit the message from a converged service user and the type of the Request-URI address in the message by a traditional message service system and then using a deciding unit to decide the transmitting manner of the message according to the judgment results, which achieves the technical effect that the message transmitting efficiency of the converged service system is increased and the user experience is improved.

### Tenth embodiment

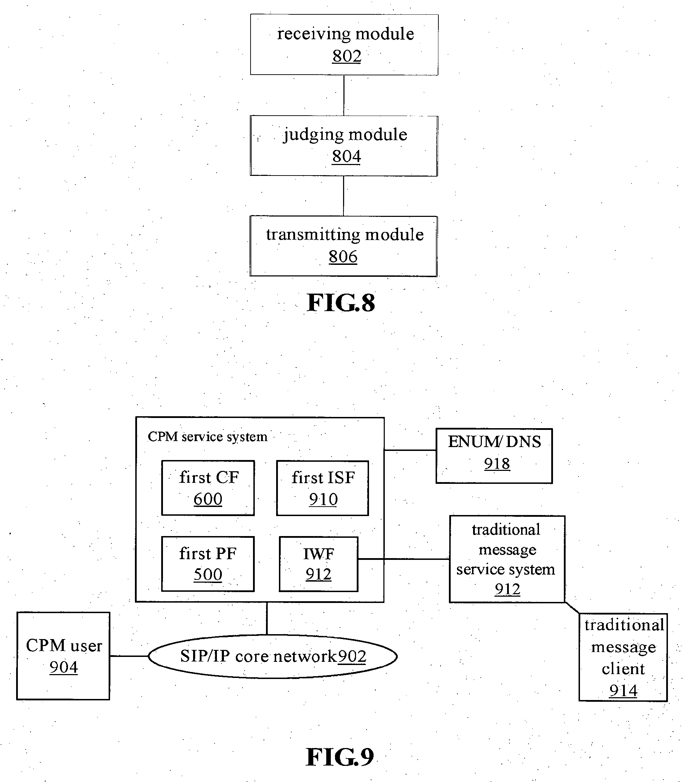

Fig. 8 is a block diagram of an apparatus for transmitting messages according to the tenth embodiment of the present invention.

As shown in Fig. 8, an apparatus for transmitting messages according to the tenth embodiment of the present invention comprises: a receiving module **802** for receiving a message transmitting request from a converged service user; a judging module **804** for judging whether it needs to transmit the message by means of traditional message service; and a transmitting module **806** for transmitting the message to a destination user according to the judgment results.

The apparatus for transmitting messages according to the tenth embodiment of the present invention judges whether it needs to transmit the destination user type of a message from a converged service user by a traditional message service system and then transmits the message to the destination user according to the judgment results, thus avoiding the technical problems that the converged service system cannot judge whether it needs to interact with the traditional message service system timely and affects user experience, which achieves the technical effects that the message transmitting efficiency is improved and the user experience is improved.

Preferably, the judging module is further used for judging the type of the Request-URI address in the message, wherein the type of the Request-URI address includes telephone number resource identification (TEL URI) address and session initiation protocol identification (SIP URI) address. If the Request-URI address is a TEL URI, then the message can be directly sent to the SIP/IP Core.

Preferably, when the type of Request-URI address is a SIP URI address, the apparatus further comprises: ENUM/DNS for converting the SIP URI address into a corresponding TEL URI address. If the Request-URI address is a SIP URI address, then it further needs to access an ENUM/DNS server to convert this SIP URI address into a corresponding TEL URI address and then transmits it.

The apparatus for transmitting messages according to the tenth embodiment of the present invention avoids the technical problems that the converged service system cannot judge whether it needs to interact with the traditional message service system timely and thus affects user experience, which achieves the technical effect that the message transmitting efficiency of the converged service system is increased and the user experience is improved.

### Eleventh embodiment

Fig. 9 is a schematic diagram of a system for transmitting messages according to the eleventh embodiment of the present invention. The system is used for a converged service user to transmit messages to a traditional message service user.

As shown in Fig. 9, the system for transmitting messages according to the eleventh embodiment of the present invention comprises: a SIP/IP Core **902** for receiving a message transmitting request from a converged service user **904;** a first PF **500** for performing authentication to the message in the point-to-point form and deciding the transmitting manner of the message; a first CF **600** for performing authentication to the message in the group message form and deciding the transmitting manner of the message; a first ISF **910** for selecting a corresponding IWF for the message; an IWF **912** for transmitting the message to a traditional message service system; and a traditional message service system **914** for transmitting the message to a destination user **916.**

Preferably, the system further comprises: ENUM/DNS **918** for converting the SIP URI address into a corresponding TEL URI address when the type of Request-URI address is a SIP URI address.

The system for transmitting messages according to the eleventh embodiment of the present invention avoids the technical problems that the converged service system cannot judge whether it needs to interact with the traditional message service system timely and thus affects user experience by using PF/CF to decide the transmitting manner of messages, which achieves the technical effect that the message transmitting efficiency of the converged service system is increased and the user experience is improved.

### Twelfth embodiment

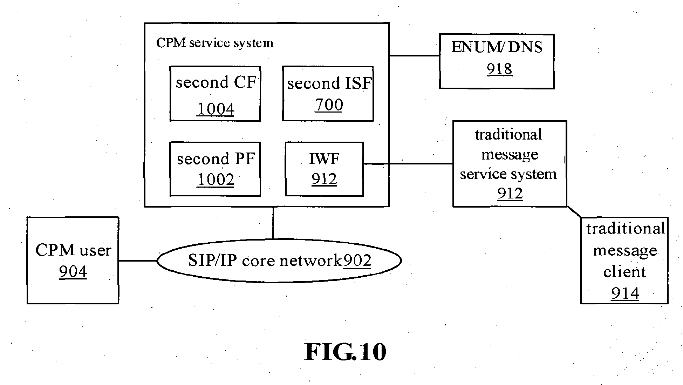

Fig. 10 is a schematic diagram of a system for transmitting messages according to the twelfth embodiment of the present invention. The system is used for a converged service user to transmit messages to a traditional message service user.

As shown in Fig. 10, the system for transmitting messages according to the eleventh embodiment of the present invention comprises; a SIP/IP Core **902** for receiving a message transmitting request from a converged service user **904;** a second PF **1002** for performing authentication to the message in the point-to-point form; a second CF **1004** for performing authentication to the message in the group message form; a second ISF **700** for deciding the transmitting manner of the message, and selecting a corresponding IWF for the message; an IWF **912** for transmitting the message to a traditional message service system; and a traditional message service system **914** for transmitting the message to a destination user **916.**

Preferably, the system further comprises: an ENUM/DNS **918** for converting a SIP URI address into a corresponding TEL URI address when the type of Request-URI address is SIP URI address.

The system for transmitting messages according to the twelfth embodiment of the present invention avoids the technical problems that the converged service system cannot judge whether it needs to interact with the traditional message service system timely and thus affects user experience by using ISF to decide the transmitting manner of messages, which achieves the technical effect that the message transmitting efficiency of the converged service system is increased and the user experience is improved.

In summary, the method, apparatus and system for transmitting messages according to the embodiments of the present invention solve the technical problems that the converged service system cannot judge whether it needs to interact with the traditional message service system timely and thus affects user experience, which achieves the technical effect that the message transmitting efficiency of the converged service system is increased and the user experience is improved.

Apparently, those skilled in the art should understand, each foregoing module or each step of the present invention can be realized with general computing devices; they can be centralized on a single computing device or distributed in the network consisting of several computing devices; alternatively, they can be realized through program codes that can be executed by computing devices so that they can be stored in storage devices and executed by computing devices, or they can be manufactured as each integrated circuit module respectively, or several modules or steps of them can be manufactured as a single integrated circuit. In this way, the present invention is not limited to any specific combination of hardware and software.

The foregoing description is only for preferred embodiments of the present invention, and shall not limit the present invention. Those skilled in the art should understand that the present invention can have various modifications and alternations. Any modifications, equivalent replacements or improvements without departing the principles of the present invention shall belong to the protection scope of the present invention.

## Claims

1. A method for transmitting messages, **characterized in that** it comprises:
a session initiation protocol/Internet protocol core network (SIP/IP Core) to which a converged service system belongs receiving a message transmitting request from a participant function module (PF) to which a converged service user belongs or from a controller function module (CF) to which a group user address belongs, wherein the message transmitting request carries a destination user address of the message;
the SIP/IP Core transmitting the message to the destination user address, if the transmission fails, then the PF/CF judging whether it needs to transmit the message by means of non-converged message service;
judging the type of the destination user, Request-URI, address, wherein the type of the Request-URI address includes telephone number resource identification, TEL URI, address and session initiation protocol identification, SIP URI, address; and
the converged service system transmitting the message to the destination user according to the judgment results.

2. The method according to claim 1, **characterized in that** the message transmitting request further carries a user identification of the converged service user.

3. The method according to claim 2, **characterized in that** the SIP/IP Core transmitting the message to the destination user, Request-URI, address of the message, if the transmission fails, then the PF/CF judging whether it needs to transmit the message by means of non-converged message service comprises:
the SIP/IP Core transmitting the message to the PF to which the converged service user belongs according to the user identification of the converged service user, or transmitting the message to the CF to which the group user address belongs according to the group user address;
the PF/CF transmitting the message to the SIP/IP Core;
the SIP/IP Core transmitting the message to the Request-URI address; and
if the transmission fails, then the PF/CF judging whether it needs to transmit the message by means of non-converged message service.

4. The method according to claim 3, **characterized in that** the PF/CF transmitting the message to the SIP/IP Core comprises:
the PF/CF performing authentication to the message and transmitting the message to the SIP/IP Core after the authentication is passed.

5. The method according to claim 3, **characterized in that** before the PF/CF transmitting the message to the SIP/IP Core, the method further comprises:
the PF/CF judging whether the Request-URI address is TEL URI address and SIP URI address, if not, then judging whether it needs to transmit the message by means of non-converged message service.

6. The method according to claim 5, **characterized in that** the PF/CF judging whether the Request-URI address is TEL URI address and SIP URI address further comprises:
the PF/CF performing authentication to the message and the PF/CF judging whether the Request-URI address is TEL URI address and SIP URI address after the authentication is passed.

7. The method according to claim 1, **characterized in that** the converged service system transmitting the message to the destination user according to the judgment results further comprises:
the PF/CF judging the type of the Request-URI address, wherein the type of the Request-URI address comprises telephone number resource identification, TEL URI, address and session initiation protocol identification, SIP URI, address; and
the PF/CF transmitting the message to the destination user according to the judgment results.

8. The method according to claim 7, **characterized in that** the PF/CF transmitting the message to the destination user according to the judgment results further comprises:
if the Request-URI address is a TEL URI address, then
the PF/CF transmitting the message to the SIP/IP Core, wherein the carried Request-URI address is the SIP URI address of an InterSelecting Function module (ISF) in the converged service system and the message body carries the TEL URI address of the message;
the SIP/IP Core transmitting the message to the ISF according to the Request-URI address;
the ISF selecting a corresponding InterWorking Function module (IWF), and transmitting the message to the IWF, and the IWF transmitting the message to a non-converged message service system; and
the non-converged message service system transmitting the message to the destination user;
if the Request-URI address is a SIP URI address, then
the PF/CF transmitting an address conversion request to a telephone number mapping working group (ENUM)/domain name system (DNS), wherein the address conversion request carries the SIP URI address of the destination user;
the ENUM/DNS returning a corresponding TEL URI address to the PF/CF after having performed address conversion to the SIP URI address;
the PF/CF transmitting the message to the SIP/IP Core, wherein the carried Request-URI address is the SIP URI address of an InterSelecting module in the converged service system and the message body carries the returned TEL URI address;
the SIP/IP Core transmitting the message to the ISF according to the Request-URI address;
the ISF selecting a corresponding IWF and transmitting the message to the IWF, and the IWF transmitting the message to a non-converged message service system; and
the non-converged message service system transmitting the message to the destination user.

9. The method according to claim 8, **characterized in that** the message body uses the MIME format to carry the returned TEL URI address.

10. The method according to claim 1, **characterized in that** the converged service system transmitting the message to the destination user according to the judgment results comprises:
the PF/CF transmitting the message to an InterSelecting module (ISF);
the ISF judging the type of the Request-URI address, wherein the type of the Request-URI address includes telephone number resource identification, TEL URI, address and session initiation protocol identification, SIP URI, address; and
the ISF transmitting the message to the destination user according to the judgment results.

11. The method according to claim 10, **characterized in that** the ISF transmitting the message to the destination user according to the judgment results comprises:
if the Request-URI address is a TEL URI address, then
the ISF selecting a corresponding IWF and transmitting the message to the IWF, and the IWF transmitting the message to the non-converged message service system; and
the non-converged message service system transmitting the message to the destination user;
if the Request-URI address is a SIP URI address, then
the ISF transmitting an address conversion request to the ENUM/DNS, wherein the address conversion request carries the SIP URI address of the destination user;
the ENUM/DNS returning a corresponding TEL URI address to the ISF after having performed address conversion to the SIP URI address;
the ISF selecting a corresponding IWF and transmitting the message to the IWF, and the IWF transmitting the message to the non-converged message service system; and
the non-converged message service system transmitting the message to the destination user.

12. The method according to claim 11, **characterized in that** the ISF stores the TEL URI address of the destination user in a message body encapsulated by the MIME and transmits it to the IWF.

13. An apparatus for transmitting messages, **characterized in that** it comprises:
a receiving module (802), configured to receive a message transmitting request from a converged service user;
a judging module (804), configured to judge whether it needs to transmit the message by means of non-converged message service; and
a transmitting module (806), configured to transmit the message to the destination user according to the judgment results;
wherein the judging module (804) is further configured to judge a type of the Request-URI address in the message, wherein the type of the Request-URI address includes telephone number resource identification, TEL URI, address and session initiation protocol identification, SIP URI, address;
wherein when the type of the Request-URI address is a SIP URI address, the apparatus further comprises:
a telephone number mapping working group/domain name system (ENUM/DNS 918), configured to convert the SIP URI address into a corresponding TEL URI address.

14. A system for transmitting messages for a converged service user to transmit messages to a non-converged message service user, **characterized in that** it comprises;
a SIP/IP core network (902), configured to receive a message transmitting request from a converged service user;
a first participant function module (PF 500), configured to perform authentication to the message in a point-to-point form and to decide a transmitting manner of the message;
a first controller function module (CF 600), configured to perform authentication to the message in a group message form and to decide a transmitting manner of the message;
a first InterSelecting Function module (ISF 910), configured to select a corresponding InterWorking Function module (IWF 912) for the message;
the IWF (912), configured to transmit the message to a non-converged message service system; and
a non-converged message service system, configured to transmit the message to a destination user.

15. The system according to claim 14, **characterized in that** the system further comprises:
a telephone number mapping working group/domain name system ENUM/DNS (918) for converting the SIP URI address into a respective TEL URI address when the type of the Request-URI address of the message is SIP URI address.

## Patentansprüche

1. Verfahren zur Nachrichtenübertragung, **dadurch gekennzeichnet, dass** es Folgendes aufweist:
Empfangen einer Nachrichtenübertragungs-Anfrage durch ein Session Initiation Protocol/Internetprotokoll-Kernnetz (SIP/IP-Kern), zu dem ein konvergiertes Dienstsystem gehört, von einem Teilnehmer-Funktionsmodul (PF), zu dem ein konvergierter Dienstbenutzer gehört, oder von einem Controller-Funktionsmodul (CF), zu dem eine Gruppen-Benutzeradresse gehört, wobei die Nachrichtenübertragungs-Anfrage eine Ziel-Benutzeradresse der Nachricht führt;
Übertragen der Nachricht an die Ziel-Benutzeradresse durch den SIP/IP-Kern, falls die Übertragung fehlschlägt, dann Beurteilung durch das PF/CF, ob es die Nachricht über einen nicht-konvergierten Nachrichtendienst übertragen muss;
Beurteilen der Art der Zielbenutzer-, Request-URI, -Adresse, wobei die Art der Request-URI-Adresse eine Telefonnummer-Betriebsmittelkennung-, TEL URI, -Adresse und eine Session-Initiation-Protocol-Kennung-, SIP URI, -Adresse umfasst; und
Übertragen der Nachricht an den Zielbenutzer gemäß den Ergebnissen der Beurteilung durch das konvergierte Dienstsystem.

2. Verfahren nach Anspruch 1, **dadurch gekennzeichnet, dass** die Nachrichtenübertragungs-Anfrage ferner eine Benutzerkennung des konvergierten Dienstbenutzers führt.

3. Verfahren nach Anspruch 2, **dadurch gekennzeichnet, dass** das Übertragen der Nachricht an die Zielbenutzer-, Request-URI, -Adresse der Nachricht durch den SIP/IP-Kern, falls die Übertragung fehlschlägt, das Beurteilen durch das PF/CF, ob es die Nachricht über einen nicht-konvergierten Nachrichtendienst übertragen muss, Folgendes umfasst:
Übertragen der Nachricht durch den SIP/IP-Kern an das PF, zu dem der konvergierte Dienstbenutzer gehört, gemäß der Benutzerkennung des konvergierten Dienstbenutzers, oder Übertragen der Nachricht an das CF, zu dem die Gruppen-Benutzeradresse gehört, gemäß der Gruppen-Benutzeradresse;
Übertragen der Nachricht an den SIP/IP-Kern durch das PF/CF;
Übertragen der Nachricht an die Request-URI-Adresse durch den SIP/IP-Kern; und
falls die Übertragung fehlschlägt, Beurteilen, durch das PF/CF, ob es die Nachricht über einen nicht-konvergierten Nachrichtendienst übertragen muss.

4. Verfahren nach Anspruch 3, **dadurch gekennzeichnet, dass** das Übertragen der Nachricht an den SIP/IP-Kern durch das PF/CF Folgendes aufweist:
Ausführen einer Authentifizierung für die Nachricht durch das PF/CF und Übertragen der Nachricht an den SIP/IP-Kern, nachdem die Authentifizierung erfolgreich war.

5. Verfahren nach Anspruch 3, **dadurch gekennzeichnet, dass** vor dem Übertragen der Nachricht an den SIP/IP-Kern durch das PF/CF das Verfahren ferner Folgendes umfasst:
Beurteilen durch das PF/CF, ob die Request-URI-Adresse eine TEL-URI-Adresse und SIP-URI-Adresse ist, falls nicht, Beurteilen, ob es die Nachricht über einen nicht-konvergierten Nachrichtendienst übertragen muss.

6. Verfahren nach Anspruch 5, **dadurch gekennzeichnet, dass** das Beurteilen durch das PF/CF, ob die Request-URI-Adresse eine TEL-URI-Adresse und SIP-URI-Adresse ist, ferner Folgendes aufweist:
Ausführen einer Authentifizierung für die Nachricht durch das PF/CF und
Beurteilen durch das PF/CF, ob die Request-URI-Adresse eine TEL-URI-Adresse und SIP-URI-Adresse ist, nachdem die Authentifizierung erfolgreich war.

7. Verfahren nach Anspruch 1, **dadurch gekennzeichnet, dass** das Übertragen der Nachricht gemäß den Ergebnissen der Beurteilung an den Zielbenutzer durch das konvergierte Dienstsystem ferner Folgendes aufweist:
Beurteilen der Art der Request-URI-Adresse durch das PF/CF, wobei die Art der Request-URI-Adresse eine Telefonnummer-Betriebsmittelkennung-, TEL URI, -Adresse und eine Session-Initiation-Protocol-Kennung-, SIP URI, -Adresse umfasst; und
Übertragen der Nachricht gemäß den Ergebnissen der Beurteilung an den Zielbenutzer durch das PF/CF.

8. Verfahren nach Anspruch 7, **dadurch gekennzeichnet, dass** das Übertragen der Nachricht gemäß den Ergebnissen der Beurteilung an den Zielbenutzer durch das PF/CF ferner Folgendes aufweist:
falls die Request-URI-Adresse eine TEL-URI-Adresse ist, dann Übertragen der Nachricht an den SIP/IP-Kern durch das PF/CF, wobei die geführte Request-URI-Adresse die SIP-URI-Adresse eines InterSelecting-Funktionsmoduls (ISF) in dem konvergierten Dienstsystem ist und der Nachrichtentext die TEL-URI-Adresse der Nachricht führt;
Übertragen der Nachricht an das ISF durch den SIP/IP-Kern gemäß der Request-URI-Adresse;
Auswählen, durch das ISF, eines entsprechenden InterWorking-Funktionsmoduls (IWF), und Übertragen der Nachricht an das IWF, und Übertragen der Nachricht an ein nicht-konvergiertes Nachrichten-Dienstsystem durch das IWF; und
Übertragen der Nachricht an den Zielbenutzer durch das nicht-konvergierte Nachrichten-Dienstsystem;
falls die Request-URI-Adresse eine SIP-URI-Adresse ist, dann Übertragen einer Adressen-Umwandlungsanfrage an ein Telefonnummer-Mapping-Arbeitsgruppe(ENUM)/Domain-Name-System (DNS) durch das PF/CF, wobei die Adressen-Umwandlungsanfrage die SIP-URI-Adresse des Zielbenutzers führt;
Rücksenden einer entsprechenden TEL-URI-Adresse an das PF/CF durch das ENUM/DNS nach Ausführen einer Adressenumwandlung an der SIP-URI-Adresse;
Übertragen der Nachricht an den SIP/IP-Kern durch das PF/CF, wobei die geführte Request-URI-Adresse die SIP-URI-Adresse eines InterSelecting-Moduls in dem konvergierten Dienstsystem ist und der Nachrichtentext die zurückgesandte TEL-URI-Adresse führt;
Übertragen der Nachricht an das ISF durch den SIP/IP-Kern gemäß der Request-URI-Adresse;
Auswählen, durch das ISF, eines entsprechenden IWF und Übertragen der Nachricht an das IWF, und Übertragen der Nachricht an ein nicht-konvergiertes Nachrichten-Dienstsystem durch das IWF; und
Übertragen der Nachricht an den Zielbenutzer durch das nicht-konvergierte Nachrichten-Dienstsystem.

9. Verfahren nach Anspruch 8, **dadurch gekennzeichnet, dass** der Nachrichtentext das MIME-Format verwendet, um die zurückgesandte TEL-URI-Adresse zu führen.

10. Verfahren nach Anspruch 1, **dadurch gekennzeichnet, dass** das Übertragen der Nachricht durch das konvergierte Dienstsystem gemäß den Ergebnissen der Beurteilung an den Zielbenutzer Folgendes aufweist:
Übertragen der Nachricht an ein InterSelecting-Modul (ISF) durch das PF/CF;
Beurteilen der Art der Request-URI-Adresse durch das ISF, wobei die Art der Request-URI-Adresse die Telefonnummer-Betriebsmittelkennung-, TEL URI, -Adresse und die Session-Initiation-Protocol-Kennung-, SIP URI, -Adresse umfasst; und
Übertragen der Nachricht an den Zielbenutzer gemäß den Ergebnissen der Beurteilung durch das ISF.

11. Verfahren nach Anspruch 10, **dadurch gekennzeichnet, dass** das Übertragen der Nachricht gemäß den Ergebnissen der Beurteilung an den Zielbenutzer durch das ISF Folgendes aufweist:
falls die Request-URI-Adresse eine TEL-URI-Adresse ist, dann Auswählen, durch das ISF, eines entsprechenden IWF und Übertragen der Nachricht an das IWF, und Übertragen der Nachricht an das nicht-konvergierte Nachrichten-Dienstsystem durch das IWF; und
Übertragen der Nachricht an den Zielbenutzer durch das nicht-konvergierte Nachrichten-Dienstsystem;
falls die Request-URI-Adresse eine SIP-URI-Adresse ist, dann Übertragen einer Adressen-Umwandlungsanfrage an das ENUM/DNS durch das ISF, wobei die Adressen-Umwandlungsanfrage die SIP-URI-Adresse des Zielbenutzers führt;
Rücksenden einer entsprechenden TEL-URI-Adresse an das ISF durch das ENUM/DNS nach Ausführen einer Adressenumwandlung an der SIP-URI-Adresse;
Auswählen, durch das ISF, eines entsprechenden IWF und Übertragen der Nachricht an das IWF, und
Übertragen der Nachricht an das nicht-konvergierte Nachrichten-Dienstsystem durch das IWF; und
Übertragen der Nachricht an den Zielbenutzer durch das nicht-konvergierte Nachrichten-Dienstsystem.

12. Verfahren nach Anspruch 11, **dadurch gekennzeichnet, dass** das ISF die TEL-URI-Adresse des Zielbenutzers in einem Nachrichtentext speichert, der durch MIME eingekapselt ist, und diese an das IWF überträgt.

13. Einrichtung zur Nachrichtenübertragung, **dadurch gekennzeichnet, dass** sie Folgendes aufweist:
ein Empfangsmodul (802), das dafür ausgelegt ist, eine Nachrichtenübertragungs-Anfrage von einem konvergierten Dienstbenutzer zu empfangen;
ein Beurteilungsmodul (804), das dafür ausgelegt ist, zu beurteilen, ob es die Nachricht über einen nicht-konvergierten Nachrichtendienst übertragen muss; und
ein Übertragungsmodul (806), das dafür ausgelegt ist, die Nachricht gemäß den Ergebnissen der Beurteilung an den Zielbenutzer zu übertragen;
wobei das Beurteilungsmodul (804) ferner dafür ausgelegt ist, eine Art der Request-URI-Adresse in der Nachricht zu beurteilen, wobei die Art der Request-URI-Adresse die Telefonnummer-Betriebsmittelkennung-, TEL-URI, -Adresse und die Session-Initiation-Protocol-Kennung-, SIP-URI, -Adresse umfasst;
wobei, wenn die Art der Request-URI-Adresse eine SIP-URI-Adresse ist, die Einrichtung ferner Folgendes aufweist:
ein Telefonnummer-Mapping-Arbeitsgruppe/Domain-Name-System (ENUM/DNS 918), das dafür ausgelegt ist, die SIP-URI-Adresse in eine entsprechende TEL-URI-Adresse umzuwandeln.

14. System zur Nachrichtenübertragung für einen konvergierten Dienstbenutzer zur Übertragung von Nachrichten an einen nicht-konvergierten Nachrichten-Dienstbenutzer, **dadurch gekennzeichnet, dass** es Folgendes aufweist:
ein SIP/IP-Kernnetz (902), das dafür ausgelegt ist, eine Nachrichtenübertragungs-Anfrage von einem konvergierten Dienstbenutzer zu empfangen;
ein erstes Teilnehmer-Funktionsmodul (PF 500), das dafür ausgelegt ist, eine Authentifizierung für die Nachricht in einer Punkt-zu-Punkt-Form auszuführen und über eine Übertragungsart für die Nachricht zu entscheiden;
ein erstes Controller-Funktionsmodul (CF 600), das dafür ausgelegt ist, eine Authentifizierung für die Nachricht in einer Gruppennachricht-Form auszuführen und über eine Übertragungsart für die Nachricht zu entscheiden;
ein erstes InterSelecting-Funktionsmodul (ISF 910), das dafür ausgelegt ist, ein entsprechendes InterWorking-Funktionsmodul (IWF 912) für die Nachricht auszuwählen;
das IWF (912), das dafür ausgelegt ist, die Nachricht an ein nicht-konvergiertes Nachrichten-Dienstsystem zu übertragen; und
ein nicht-konvergiertes Nachrichten-Dienstsystem, das dafür ausgelegt ist, die Nachricht an einen Zielbenutzer zu übertragen.

15. System nach Anspruch 14, **dadurch gekennzeichnet, dass** das System ferner Folgendes aufweist:
ein Telefonnummer-Mapping-Arbeitsgruppe/Domain-Name-System ENUM/DNS (918) zum Umwandeln der SIP-URI-Adresse in eine jeweilige TEL-URI-Adresse, wenn die Art der Request-URI-Adresse der Nachricht eine SIP-URI-Adresse ist.

## Revendications

1. Procédé de transmission de messages, **caractérisé en ce qu'**il comprend :
un réseau coeur de protocole d'ouverture de session/protocole Internet (coeur SIP/IP) auquel appartient un système de services convergents recevant une demande de transmission de message à partir d'un module de fonction participant (PF) auquel appartient un utilisateur de services convergents ou à partir d'un module de fonction de commande (CF) auquel appartient une adresse d'utilisateur de groupe, la demande de transmission de message contenant une adresse d'utilisateur de destination du message,
la transmission par le coeur SIP/IP du message à l'adresse d'utilisateur de destination, si la transmission échoue, alors l'évaluation par le PF/CF s'il a besoin de transmettre le message au moyen d'un service de message non convergent,
l'évaluation du type de l'adresse de l'utilisateur de destination, Request-URI, le type de l'adresse Request-URI comprenant une adresse d'identification de ressource de numéro de téléphone, TEL URI, et une adresse d'identification de protocole d'ouverture de session, SIP URI, et
la transmission par le système de services convergents du message à l'utilisateur de destination en fonction des résultats de l'évaluation.

2. Procédé selon la revendication 1, **caractérisé en ce que** la demande de transmission de message contient en outre une identification d'utilisateur de l'utilisateur de service convergent.

3. Procédé selon la revendication 2, **caractérisé en ce que** la transmission par le coeur SIP/IP du message à l'adresse d'utilisateur de destination, Request-URI, du message, si la transmission échoue, alors l'évaluation par le PF/CF s'il a besoin de transmettre le message au moyen d'un service de message non convergent, comprend :
la transmission par le coeur SIP/IP du message au PF auquel l'utilisateur de services convergents appartient en fonction de l'identification d'utilisateur de l'utilisateur de services convergents ou la transmission du message au CF auquel l'adresse d'utilisateur de groupe appartient en fonction de l'adresse d'utilisateur de groupe,
la transmission par le PF/CF du message au coeur SIP/IP,
la transmission par le coeur SIP/IP du message à l'adresse Request-URI, et
si la transmission échoue, alors l'évaluation par le PF/CF s'il a besoin de transmettre le message au moyen d'un service de message non convergent.

4. Procédé selon la revendication 3, **caractérisé en ce que** la transmission par le PF/CF du message au coeur SIP/IP comprend :
l'exécution par le PF/CF d'une authentification du message et la transmission du message au coeur SIP/IP après le passage avec succès de l'authentification.

5. Procédé selon la revendication 3, **caractérisé en ce que**, avant la transmission par le PF/CF du message au coeur SIP/IP, le procédé comprend en outre :
l'évaluation par le PF/CF si l'adresse Request-URI est l'adresse TEL URI et l'adresse SIP-URI, si ce n'est pas le cas, alors l'évaluation s'il a besoin de transmettre le message au moyen d'un service de message non convergent.

6. Procédé selon la revendication 5, **caractérisé en ce que** l'évaluation par le PF/CF si l'adresse Request-URI est l'adresse TEL URI et l'adresse SIP URI comprend en outre :
l'exécution par le PF/CF d'une authentification du message et l'évaluation par le PF/CF si l'adresse Request-URI est l'adresse TEL URI et l'adresse SIP URI après le passage avec succès de l'authentification.

7. Procédé selon la revendication 1, **caractérisé en ce que** la transmission par le système de services convergents du message à l'utilisateur de destination en fonction des résultats de l'évaluation comprend en outre :
l'évaluation par le PF/CF du type de l'adresse Request-URI, le type de l'adresse Request-URI comprenant l'adresse d'identification de ressource de numéro de téléphone, TEL URI, et l'adresse d'identification de protocole d'ouverture de session, SIP URI, et
la transmission par le PF/CF du message à l'utilisateur de destination en fonction des résultats de l'évaluation.

8. Procédé selon la revendication 7, **caractérisé en ce que** la transmission par le PF/CF du message à l'utilisateur de destination en fonction des résultats de l'évaluation comprend en outre :
si l'adresse Request-URI est une adresse TEL URI, alors
la transmission par le PF/CF du message au coeur SIP/IP, l'adresse Request-URI transportée étant l'adresse SIP URI d'un module de fonction d'intersélection (ISF) dans le système de services convergents et le corps de message contenant l'adresse TEL URI du message,
la transmission par le coeur SIP/IP du message à l'ISF en fonction de l'adresse Request-URI,
la sélection par l'ISF d'un module de fonction d'interfonctionnement (IWF) correspondant et la transmission du message à l'IWF, et la transmission par l'IWF du message à un système de services de messages non convergents, et
la transmission par le système de services de messages non convergents du message à l'utilisateur de destination,
si l'adresse Request-URI est une adresse SIP URI, alors
la transmission par le PF/CF d'une demande de conversion d'adresse à un groupe de travail de mise en correspondance de numéros de téléphone (ENUM)/système de noms de domaine (DNS), la demande de conversion d'adresse contenant l'adresse SIP URI de l'utilisateur de destination,
le renvoi par l'ENUM/DNS d'une adresse TEL URI correspondante au PF/CF après avoir exécuté la conversion d'adresse vers l'adresse SIP URI,
la transmission par le PF/CF du message au coeur SIP/IP, l'adresse Request-URI transportée étant l'adresse SIP URI d'un module d'intersélection dans le système de services convergents et le corps de message contenant l'adresse TEL URI renvoyée,
la transmission par le coeur SIP/IP du message à l'ISF en fonction de l'adresse Request-URI,
la sélection par l'ISF d'un IWF correspondant et la transmission du message à l'IWF, et la transmission par l'IWF du message à un système de services de messages non convergents, et
la transmission par le système de services de messages non convergents du message à l'utilisateur de destination

9. Procédé selon la revendication 8, **caractérisé en ce que** le corps de message utilise le format MIME pour transporter l'adresse TEL URI renvoyée.

10. Procédé selon la revendication 1, **caractérisé en ce que** la transmission par le système de services convergents du message à l'utilisateur de destination en fonction des résultats de l'évaluation comprend :
la transmission par le PF/CF du message à un module d'intersélection (ISF),
l'évaluation par l'ISF du type de l'adresse Request-URI, le type de l'adresse Request-URI comprenant l'adresse d'identification de ressource de numéro de téléphone, TEL URI, et l'adresse d'identification de protocole d'ouverture de session, SIP URI, et
la transmission par l'ISF du message à l'utilisateur de destination en fonction des résultats de l'évaluation.

11. Procédé selon la revendication 10, **caractérisé en ce que** la transmission par l'ISF du message à l'utilisateur de destination en fonction des résultats de l'évaluation comprend :
si l'adresse Request-URI est une adresse TEL URI, alors
la sélection par l'ISF d'un IWF correspondant et la transmission du message à l'IWF, et la transmission par l'IWF du message au système de services de messages non convergents, et
la transmission par le système de services de messages non convergents du message à l'utilisateur de destination,
si l'adresse Request-URI est une adresse SIP URI, alors
la transmission par l'ISF d'une demande de conversion d'adresse à l'ENUM/DNS, la demande de conversion d'adresse contenant l'adresse SIP URI de l'utilisateur de destination,
le renvoi par l'ENUM/DNS d'une adresse TEL URI correspondante à l'ISF après avoir exécuté la conversion d'adresse vers l'adresse SIP URI,
la sélection par l'ISF d'un IWF correspondant et la transmission du message à l'IWF, et la transmission par l'IWF du message au système de services de messages non convergents, et
la transmission par le système de services de messages non convergents du message à l'utilisateur de destination.

12. Procédé selon la revendication 11, **caractérisé en ce que** l'ISF conserve en mémoire l'adresse TEL URI de l'utilisateur de destination dans un corps de message encapsulé par le MIME et la transmet à l'IWF.

13. Un appareil de transmission de messages, **caractérisé en ce qu'**il comprend :
un module de réception (802) configuré de façon à recevoir une demande de transmission de message à partir d'un utilisateur de services convergents,
un module d'évaluation (804) configuré de façon à évaluer s'il a besoin de transmettre le message au moyen d'un service de message non convergent, et
un module de transmission (806) configuré de façon à transmettre le message à l'utilisateur de destination en fonction des résultats de l'évaluation, dans lequel le module d'évaluation (804) est configuré en outre de façon à évaluer un type de l'adresse Request-URI dans le message, le type de l'adresse Request-URI comprenant une adresse d'identification de ressource de numéro de téléphone, TEL URI, et une adresse d'identification de protocole d'ouverture de session, SIP URI,
dans lequel, lorsque le type de l'adresse Request-URI est une adresse SIP URI, l'appareil comprend en outre :
un groupe de travail de mise en correspondance de numéros de téléphone/système de noms de domaine (ENUM/DNS 918) configuré de façon à convertir l'adresse SIP URI en une adresse TEL URI correspondante.

14. Un système de transmission de messages destiné à un utilisateur de services convergents de façon à transmettre des messages à un utilisateur de services de messages non convergents, **caractérisé en ce qu'**il comprend :
un réseau coeur SIP/IP (902) configuré de façon à recevoir une demande de transmission de message à partir d'un utilisateur de services convergents,
un premier module de fonction participant (PF 500) configuré de façon à exécuter une authentification du message sous une forme point à point et de décider d'une manière de transmission du message,
un premier module de fonction de dispositif de commande (CF 600) configuré de façon à exécuter une authentification du message sous une forme de message de groupe et de décider d'une manière de transmission du message,
un premier module de fonction d'intersélection (ISF 910) configuré de façon à sélectionner un module de fonction d'interfonctionnement (IWF 912) correspondant pour le message,
l'IWF (912) configuré de façon à transmettre le message à un système de services de messages non convergents, et
un système de services de messages non convergents configuré de façon à transmettre le message à un utilisateur de destination.

15. Le système selon la revendication 14, **caractérisé en ce que** le système comprend en outre :
un groupe de travail de mise en correspondance de numéros de téléphone/système de noms de domaine ENUM/DNS (918) destiné à la conversion de l'adresse SIP URI en une adresse TEL URI respective lorsque le type de l'adresse Request-URI du message est l'adresse SIP URI.
